(19) Europäisches Patentamt

European Patent Office

Office européen des brevets

(11) **EP 1 136 463 A2**

(12) **EUROPEAN PATENT APPLICATION**

(43) Date of publication:
26.09.2001 Bulletin 2001/39

(51) Int Cl.$^7$: **C04B 41/87**

(21) Application number: 01106477.1

(22) Date of filing: 22.03.2001

| | |
|---|---|
| (84) Designated Contracting States:<br>**AT BE CH CY DE DK ES FI FR GB GR IE IT LI LU<br>MC NL PT SE TR**<br>Designated Extension States:<br>**AL LT LV MK RO SI**<br><br>(30) Priority: **23.03.2000 JP 2000081162**<br><br>(71) Applicant: **NGK INSULATORS, LTD.<br>Nagoya-City, Aichi Prefecture 467-8530 (JP)** | (72) Inventors:<br>• **Hanzawa, Shigeru, NGK Insulators, Ltd<br>Nagoya-city, Aichi-pref., 467-8530 (JP)**<br>• **Nakano, Kenji, NGK Insulators, Ltd<br>Nagoya-city, Aichi-pref., 467-8530 (JP)**<br><br>(74) Representative:<br>**Leson, Thomas Johannes Alois, Dipl.-Ing.<br>Tiedtke-Bühling-Kinne & Partner GbR,<br>TBK-Patent,<br>Bavariaring 4<br>80336 München (DE)** |

(54) **Oxidation resistant carbonaceous material and method for producing the same**

(57) To provide an innovative oxidation resistant carbonaceous material usable as an oxidation resistant carbonaceous material practically prevented from oxidation for a long duration even at a high temperature at lowest 800°C in the atmospheric air at a reasonable price and satisfying the properties such as light weight property in terms of saving energy and easy workability additionally to high strength (high heat impact resistance) at a high temperature, high reliability (toughness, impact resistance, wear resistance) as a material, and durability to environments (corrosion resistance, oxidation resistance, radiation resistance) and to provide a method for producing the same oxidation resistant carbonaceous material. This oxidation resistant carbonaceous material coated with an oxidation resistant protective layer of silicon carbide practically insusceptible to oxidation even being exposed at a high temperature at lowest 800°C in the atmospheric air for a long duration can be obtained by forming the oxidation resistant protective layer of silicon carbide by applying a coating agent containing metallic silicon and a phenol resin in a desired thickness to at least a part of the surface of a carbonaceous material, carbonizing the phenol resin by prefiring the coating agent at 1000°C or lower in an inert atmosphere, heating the material to 1420 to 2200°C in the same atmosphere, and causing reaction of the practically entire amount of the metallic silicon with carbon in the same temperature range.

FIG.1

**Description**

Background of the Invention and Related Art Statement

The present invention relates to an oxidation resistant carbonaceous material coated with an oxidation resistant protective layer of silicon carbide practically insusceptible to oxidation at a high temperature of 800°C or higher in the atmospheric air even after the material is exposed to such a condition for a long duration and to a method for producing such an oxidation resistant carbonaceous material. More particularly, the present invention relates to an oxidation resistant carbonaceous material comprising a substrate of a carbonaceous material being usable as a member for a pump for aluminum melt, a setter for metal thermal treatment, a heat resistant chain, a crucible for melting a noble metal or the like at a temperature above 800°C in the presence of the atmospheric air at least temporarily and an oxidation resistant protective layer of silicon carbide formed on the substrate, and relates to a method for producing such a oxidation resistant carbonaceous material.

Today, with rapid progress of technical innovations, a material practically insusceptible to oxidation even at a high temperature at lowest 800°C, preferably at 1,000°C or higher, in a so-called poor oxygen condition of 5% or lower oxygen concentration is highly expected to be made available in a field such as a manufacturing work field where a metal melt such as aluminum melt is used. Of course, in order to be used in such a field, it is needless to say that the material is required to have a light weight property in terms of saving energy and easy workability in addition to high strength (high heat impact resistance) at a high temperature, high reliability (toughness, impact resistance, wear resistance) as a material, and durability to environments (corrosion resistance, oxidation resistance, radiation resistance).

In some of such fields, ceramics such as silicon nitride, silicon carbide materials and the like with high heat resistance and high strength have conventionally been used, however they have a disadvantage of fragility, as their inherent property and they have a problem that they are extremely fragile to small damages and have not sufficient strength to thermal or mechanical impacts.

Further, as a measure for overcoming the above-mentioned defects of the ceramics, ceramic matrix composite (CMC) comprising compounded continuous ceramic-based fibers have been developed and its practical application is investigated in some fields. As such an attempt, a ceramic matrix composite (CMC) comprising fibers compounded in a ceramic matrix has been developed: obtained by bundling typically, several hundreds to some ten thousands of ceramic long fibers with around 10 μm diameter to form fiber bundles (yarns) and arranging the fiber bundles in two-dimensional or three-dimensional directions to form a unidirectional sheet (UD sheet) or a variety of cloths, or layering the foregoing sheet or cloths to form a preliminarily formed body (fiber preform) with a prescribed shape, and then forming the matrix within the preformed product by CVI method (chemical vapor impregnation) or by inorganic-polymer-impregnation firing method or filling the preformed product with a ceramic powder by casting-molding and then firing the resultant preformed product to form the matrix.

Specific examples of such CMC materials are a C/C composite composed of carbon fibers arranged in two- or three-dimensional directions and a matrix of carbon filling the gaps of neighboring carbon fibers and an SiC fiber-reinforced Si-SiC composite produced by impregnating a formed boy containing SiC fibers and SiC particles with Si. However, although the SiC fiber-reinforced Si-SiC composite is excellent in oxidation resistance, creep resistance, spalling resistance and the likes, the SiC fiber-reinforced Si-SiC composite has a problem that the SiC fiber-reinforced Si-SiC composite is poor in toughness as compared with the C/C composite since the lubricating property of the SiC fibers with the Si-SiC is poor and the drawing effect between the mother body and the fibers is low of resulting in low impact resistance and it is easy to burn in the presence of oxygen owing to the partial use of carbon fibers.

The inventors of the present invention have proposed an oxidation resistant carbonaceous material produced using a composite material so-called a Si-SiC type composite material comprising a yarn aggregate in which yarn elements composed of 55 to 75 wt.% of carbon, 1 to 10 wt.% of silicon, and 10 to 50 wt.% of silicon carbide and containing at least bundles of carbon fibers and a carbon component other than carbon fibers are combined in three-dimension and integrally formed so as not to separate from one another while being oriented in the layer direction and a matrix of Si-SiC based material filling the gap between the yarn elements adjacent to one another in the yarn aggregate, the composite material having a dynamic friction coefficient of 0.05 to 0.6 and porosity controlled to be 0.5 to 10%; a SiC-C/C composite compounded material and so-called a SiC type composite material composed of silicon carbide, carbon fibers, and a carbon component other than the carbon fibers and having a structure composed of a skeletal part and a matrix formed in the surrounding of the skeletal part, in which at least 50% of silicon carbide is β type, the skeletal part is made of carbon fibers and a carbon component other than the carbon fibers, a portion of the skeletal part may contain silicon carbide, the matrix is made of silicon carbide, and the matrix and the skeletal part are integrally formed, the composite material having a porosity of 0.5 to 5% and an average pore diameter of a two-peak type distribution. However, at least in order to guarantee the oxidation resistance and to completely avoid contamination of a metal melt with metal silicon, the entire surface of a member is required to be thoroughly coated with silicon carbide. Consequently, strict process control is required and it inevitably leads to high cost.

## Summary of the Invention

The present invention has been developed to solve the above-mentioned problems and an object of the present invention is to provide an innovative oxidation resistant carbonaceous material usable as an oxidation resistant carbonaceous material practically insusceptible to oxidation for a long duration even at a high temperature at lowest 800°C in the atmospheric air at a reasonable price which satisfies the light weight property in terms of saving energy and easy workability in addition to high strength (high heat impact resistance) at a high temperature, high reliability (toughness, impact resistance, wear resistance) as a material, and durability to environments (corrosion resistance, oxidation resistance, radiation resistance) and to provide a method for producing such a oxidation resistant carbonaceous material.

In view of the above-mentioned situation, the inventors of the prevent invention have made extensive investigating and consequently found that the above-mentioned problems can be solved by an oxidation resistant carbonaceous material which is coated with an oxidation resistant protective layer of silicon carbide and hence practically insusceptible to oxidation even after being exposed for a long duration at a temperature above 800°C and thus the present invention has been accomplished. Further the inventors of the present invention have found that the above-mentioned object can be achieved by a method of producing an oxidation resistant carbonaceous material whose surface is coated with an oxidation resistant protective layer of silicon carbide practically insusceptible to oxidation even if the material is exposed at a temperature above 800°C for a long duration in the presence of the atmospheric air by applying a coating agent containing metallic silicon and a phenol resin to at least the surface of a carbonaceous material in a desired thickness, carbonizing the phenol resin by prefiring the carbonaceous material coated with the coating agent at 1000°C or lower in an inert atmosphere, heating the material to 1420 to 2200°C in the same atmosphere, and reacting the practically total amount of the metallic silicon with carbon in the same temperature range to form the oxidation resistant protective layer of silicon carbide and hence the present invention has been accomplished.

## Brief Description of the Drawings

Fig. 1 is a perspective view schematically illustrating the structure of a yarn aggregate composing a base structure of a Si-SiC type composite material and a SiC type composite material to be used as one of a substrate of a carbonaceous material having an oxidation resistant protective layer relevant to the present invention.

Fig. 2(a) is a cross-section figure of the Si-SiC type composite material illustrated in Fig. 1 and cut along the IIa-IIa line and Fig. 2(b) is a cross-section figure of the same composite material illustrated in Fig. 1 and cut along the IIb-IIb line.

Fig. 3(a) is a cross-section figure of the SiC type composite material illustrated in Fig. 1 and cut along the IIa-IIa line and Fig. 3(b) is a cross-section figure of the same composite material illustrated in Fig. 1 and cut along the IIb-IIb line.

## Detailed Description of Preferred Embodiment

Not only carbon, carbon fibers, and composite carbon fibers called as a C/C composite are usable for a substrate of an oxidation resistant carbonaceous material according to the present invention but also a composite material comprising the C/C composite impregnated with Si is usable as a raw material. At first carbon itself is an example as a carbonaceous material to be used for the prevent invention. The carbon is not necessarily graphitized and may be amorphous carbon. Particularly, if amorphous carbon is used, a formed product with a desired shape corresponding to the ultimate use purpose is produced by a common method, for example, by a method using a die and the product itself is used as it is for a substrate. Its effect is that any member with a complicated shape can easily be produced. Of course, according to the use purpose, carbon fibers may be used. As such carbon fibers, any carbon fiber may be used regardless of the production method and the raw materials used. In practical use, carbon fibers are formed to a prescribed shape using a binder. In terms of durability, a C/C composite as defined hereinafter is preferable.

As described above, a composite material comprising such a C/C composite impregnated with Si can be used in the present invention. The definition of such a composite material impregnated with Si will be given below and a Si-SiC type composite material and a SiC type composite material, of which detailed description will be given later, are suitable to be used. In the present specification, the carbonaceous material not only includes carbon and carbon fibers but also, in a broader sense, a C/C composite, which is included in carbon fibers. In addition, the carbonaceous material also includes a Si-SiC type carbonaceous material and SiC type carbonaceous material, which are carbonaceous materials subjected to specified processes and obtained by impregnating such a C/C composite with a prescribed amount of metallic silicon. The properties, the production methods, and the likes will be described in detail hereinafter. Incidentally, in order to avoid terminological confusion, in the following description of the present specification, the term, a carbonaceous material, is used in a broader sense including carbon, carbon fibers, a C/C composite, a Si-SiC type composite material, and a SiC type composite material. Consequently, as a substrate, not only carbon but also carbon fibers and a variety of composite materials using the carbon fibers are usable.

In the present specification, a C/C composite means a formed body or burned body of the formed body obtained by producing bundles of carbon fibers by adding pitch, coke, and the likes, which are a powder binder to function as a matrix of bundles of carbon fibers and to be free carbon in relation to the bundles of carbon fibers after burning, and if necessary, further adding phenol resin powder, forming a soft coating of a plastic of a thermoplastic resin on the circumference of the bundles of the carbon fibers to obtain a preformed yarn as a soft intermediate material, forming the preformed yarn to be sheet-like or a cloth-like shape by a method disclosed in Japanese Patent Publication Number 2 - 80639 specification, layering a necessary amount of the preformed yarn, forming the layered yarn by a hot press, and optionally burning the formed body. That is, the C/C composite in the present invention means a composite material which is composed of carbon fibers and carbon other than carbon fibers and has a specified layered structure and a matrix: the carbon fibers form the layered structure composed of specified number of carbon fiber bundles and the carbon other than carbon fibers forms the matrix filling the gaps between neighboring layers of the layered structure.

A material produced by the following steps may be used as a C/C composite to be used as the base material: forming fiber bundles (yarn) by bundling several hundreds to some ten thousands of carbon fibers with around 10 μm diameter, coating the fiber bundles with a thermoplastic resin to obtain a soft thread-like intermediate material, forming the obtained material to a sheet-like shape by a method disclosed in JP-A-2-80639, arranging the sheet-like material in two-dimensional or three-dimensional directions to form a unidirectional sheet (UD sheet) or various kinds of cloths or layering the foregoing sheet or cloths to form a preliminarily formed body (fiber preform) with a prescribed shape, firing the coating of an organic matter of such as the thermoplastic resin formed on the outer circumference of the fiber bundles of the preliminarily formed body, and carbonizing and removing the coating. Thus, the content of JP-A-2-80639 is incorporated by reference. The C/C composite used for the present invention comprises preferably a carbon powder, especially preferably a graphitized carbon powder as a carbon component other than the carbon fibers in the above mentioned yarn.

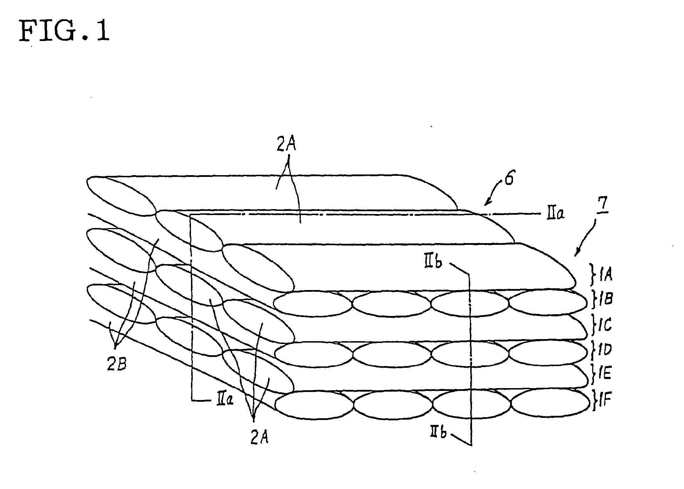

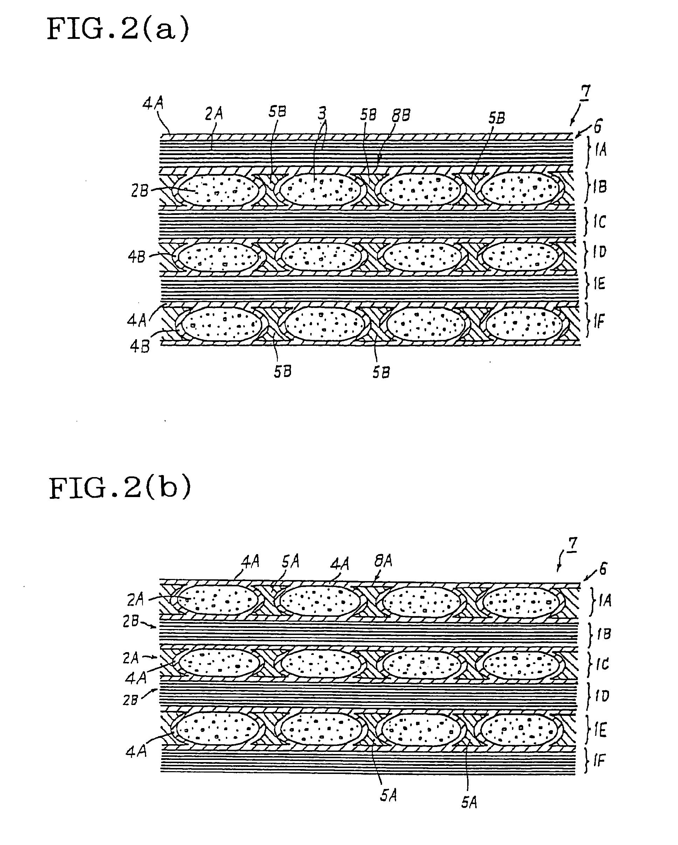

In the present invention, the Si-SiC type composite material is a composite material containing 55 to 75 wt.% of carbon, 1 to 10 wt.% of silicon, and 10 to 50 wt.% of silicon carbide; composed of a yarn aggregate in which yarn elements containing at least bundles of carbon fibers and a carbon component other than carbon fibers are combined and integrally formed so as not to separate from one another in three-dimension while being oriented in the layer direction and a matrix of Si-SiC based material filling the gap between the yarn elements adjacent to one another; and having 0.05 to 0.6 dynamic friction coefficient and porosity controlled to be 0.5 to 10%. Such a material can be produced according to the method disclosed in JP-A-10-267402 filed on September 4, 1998. Hence, the content of JP-A-10-267402 is incorporated herein by reference. The structure of the yarn aggregate is illustrated in Fig. 1 and the cross-section structure of the Si-SiC type composite material is illustrated in Fig. 2.

Incidentally, the Si-SiC type composite material includes some different phases from a silicon phase of silicon remaining in unreacted state to approximately pure silicon carbide and typically composed of the silicon phase and the silicon carbide phase and the silicon carbide phase may contain SiC coexisting phase in which the content of Si is slantingly changed. Consequently, the term, a Si-SiC type material, is a general term of materials containing C in a concentration in a range from 0 mol% to 50 mol% in a series of Si-SiC type materials. Regarding the Si-SiC type composite material relevant to the present invention, the matrix part is made of the Si-SiC type material.

Further, the Si-SiC type composite material has a matrix, preferably, of a graded composition in which the silicon content is increased more as it goes farther from the surface of the yarn. Also, in the Si-SiC type composite material, the yarn aggregate made of carbon fibers is composed of a plurality of yarn array elements which are laminated in layers and each yarn array element is formed by arranging yarn composed by bundling respectively specified number of carbon fibers in approximately parallel in two dimension. Consequently, the Si-SiC type composite material has a layer structure in which a plurality of layers of yarn array elements are laminated in a specified direction.

In the present invention, the SiC type composite material is a SiC-C/C composite compounded composite material which is composed of silicon carbide, carbon fibers, and a carbon component other than the carbon fibers and has a structure composed of a skeletal part and a matrix formed in the surrounding of the skeletal part and of which at least 50% of silicon carbide is β type and the skeletal part is made of carbon fibers and a carbon component other than carbon fibers and allows partial existence of silicon carbide and the matrix is made of silicon carbide and the matrix and the skeletal part are integrally formed. The composite material has 0.5 to 5% porosity and a two-peak type distribution curve of the average pore diameter.

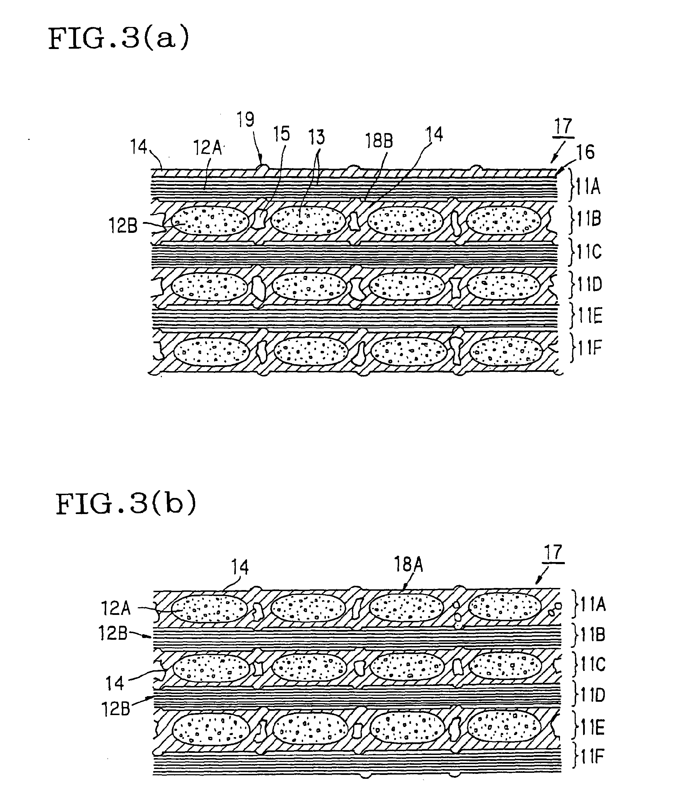

Consequently, the SiC type composite material comprises a C/C composite composed of carbon fiber yarn elements each containing carbon fibers as the skeletal part and owing to that, even if SiC is formed partly in the skeletal part, the structure of the respective carbon fibers is maintained without being broken, so that the carbon fibers are not shortened by carbo-siliconization and are almost perfectly retained and hence the SiC type composite material has a remarkable characteristic that the composite retains the mechanical strength of a raw material, the C/C composite, or the strength increased by carbo-siliconization. Further, the composite has a compounded structure in which the matrix of the SiC type material is formed in gaps between neighboring yarn elements in the yarn aggregate. At this point, the Si-C type composite material differs from the foregoing Si-SiC type composite material. Incidentally, this material can be produced according to the method disclosed in JP-A-11-31979 filed on February 9, 1999. Consequently, the content of JP-A-11-31979 is incorporated herein by reference. The cross-section structure of the SiC type material is illustrate in Fig. 3.

In the present invention, the SiC type material means a material containing a series of silicon carbide with different degrees of bonding with carbon. At the time of producing the SiC type composite material, a C/C composite is impregnated with metallic silicon and at that time, reaction of the metallic silicon with carbon atom composing the carbon fibers of the composite and/or free carbon atom remaining in the surface of the carbon fibers and partly carbonized, so that a partly carbonized silicon can be produced in the outermost surface of the C/C composite and between neighboring yarn elements made of carbon fibers and consequently, a matrix of silicon carbide can be formed among the foregoing yarn elements.

In the matrix, there possibly exists some different phases from a phase of carbonized siliceous phase in which an extremely small amounts of silicon and carbon are bonded to the pure silicon carbide crystal phase. However, in the matrix, only metallic silicon in an amount under the detection limit (0.3 wt.%) by x-ray is contained. In other words, the matrix is typically composed of the silicon carbide phase and the silicon carbide phase may include SiC (carbonized siliceous) phase with the slantingly altering content of silicon. Consequently, the term, a SiC type material, is a general term of materials containing C in a concentration in a range from at least 0.01 mol% to 50 mol% in such SiC type phases. Incidentally, to control the carbon concentration to be less than 0.01 mol% is not practical since the amount of metallic silicon to be added is required to be strictly measured and the temperature control in the final process becomes complicated in relation to the amount of the free carbon in the C/C composite. As a result, theoretically, the carbon concentration can be controlled in about 0.001 mol% level.

Next, description will be given hereinafter regarding an oxidation resistant carbonaceous material relevant to the present invention which is coated with an oxidation resistant protective layer of silicon carbide and practically insusceptible to oxidation even if the material is exposed for a long duration at a high temperature of 800°C or higher in the presence of the atmospheric air.

The oxidation resistant carbonaceous material of the present invention means a material composed of a carbonaceous material previously formed in a shape of such as a crucible, a pump for a molten metal, a triangular pyramid body of members for a various types furnaces according to a use purpose and an oxidation resistant protective layer of silicon carbide formed on the formed carbonaceous material. That the material is practically insusceptible to oxidation even if the material is exposed for a long duration at a high temperature of 800°C or higher in the presence of the atmospheric air means the increase of the weight of the material is not more than 0.5%, preferably less than 0.05% in the case where the material is kept in prescribed conditions, e.g. at a prescribed high temperature, for example, at 800°C, for at least 100 hours in the atmospheric air.

The formation of the oxidation resistant protective layer of silicon carbide is carried out by producing a coating agent containing metallic silicon and a phenol resin, applying the coating agent to a carbonaceous material in a thickness sufficient to form a 50 to 500 μm thick coat layer in the state where the carbonaceous material is air-dried, carbonizing the phenol resin by prefiring the coating layer-bearing carbonaceous material at 1000°C or lower in an inert atmosphere, heating the material to 1420 to 2200°C in the same atmosphere, and causing reaction of the practically entire amount of the metallic silicon with carbon in the same temperature range. The coating agent containing metallic silicon and a phenol resin may, in general, be produced by adding a metallic silicon powder (purity: 99.5 % or higher) to a phenol resin as to control the ratio by weight to be (2 : 1) to (1 : 2). Both the novolak type and the resol type ones can be used as phenol resin and the resol type is preferable from a viewpoint of viscosity adjustment as a coating agent.

Production of the coating agent containing metallic silicon and a phenol resin is carried out according to a common method, however if the amount of the metallic silicon in the coating agent exceeds 2 part by weight to 1 part by weight of the phenol resin, cracking may sometimes occurs at the time of coating and therefore it is not preferable. Of course, an organic solvent may be added as to keep a proper viscosity, however in that case, those having too high evaporation rates have to be avoided. If the amount of the metallic silicon in the coating agent is less than 1 part by weight to 2 parts by weight of the phenol resin, the amount of mainly amorphous carbon derived from the phenol resin may sometimes be deficient to carbonize the metallic silicon in proper quantities and therefore it is not preferable.

There is no specific restriction for the method to apply the coating agent and any method, e.g. a dipping method, a roller coating method, a doctor blade method, a spin coating method, and the likes, can be employed corresponding to the properties and the shapes of the carbonaceous material to be coated. After application of the coating material, the resultant carbonaceous material may be subjected to the prefiring process, however it is generally preferable for the carbonaceous material to be subjected to the prefiring process after it is dried at about 200°C from a viewpoint of even protective film formation. Successively, the phenol resin is carbonize by prefiring the material at 1000°C or lower in an inert atmosphere, the material is heated to 1420 to 2200°C in the same atmosphere, and reaction of the practically entire amount of the metallic silicon with carbon is caused to form the oxidation resistant protective layer of silicon carbide. Regarding the oxidation resistant carbonaceous material, relevant to the present invention, coated with the oxidation resistant protective layer of silicon carbide practically insusceptible to oxidation even if the material is exposed for a long duration at a high temperature of 800°C or higher, preferably 1000°C or higher, in the presence of the atmospheric air and produced in such a manner, the carbonaceous material used as a substrate is light in weight and, in addition to that, has high impact resistance and a low thermal expansion coefficient and while these properties being maintained as they are, the oxidation resistant protective layer of rigid silicon carbide is formed on the surface of the carbonaceous material, so that the obtained carbonaceous material shows high oxidation resistance even in the atmospheric air and is practically free of fine powder formation attributed to mechanical reaction such as wear. Consequently, the material is suitably usable for a pump for aluminum melt, a setter for metal thermal treatment, a heat resistant chain, a crucible for melting a noble metal, or the like.

Examples

Hereinafter, more detailed description of embodiments of the present invention will be given according to examples, however the present invention is not restricted to the examples and covers any modifications or embodiments as long as they are within the true scope of the invention. The oxidation resistance property in the examples was measured by the following method.

(Preliminary test for oxidation resistance)

After test specimens were kept in the atmospheric air heated to 800°C for 5 minutes, the weight of each specimen was measured and compared with the weight before the test and the decrease ratio $W_2$ was calculated according to the following equation:

$$W_2 = (W_0 - W_1)/W_0 \times 100$$

wherein, $W_0$ denotes the weight before the oxidation resistance test: $W_2$ denotes the weight after the oxidation resistance test: and $W_2$ denotes the weight decrease ratio.

(Oxidation resistance measurement test)

After test specimens were kept in the atmospheric air heated to 800°C for a prescribed duration, the weight of each specimen was measured and compared with the weight before the test and the increase/decrease ratio $W_2$ was calculated according to the following equation:

$$W_2 = (W_0 - W_1)/W_0 \times 100$$

wherein, $W_0$ denotes the weight before the oxidation

resistance test: $W_1$ denotes the weight after the oxidation resistance test: and $W_2$ denotes the weight increase/decrease ratio (decrease was distinguished by adding - sign before the numeral).

(Production example)

(1) Production of a formed product made of Si-C.C. for a part of a setter for thermal treatment of a metal

At first, carbon fiber bundles were produced by adding pitch, which was a powder binder to function as a matrix of bundles of carbon fibers and to be free carbon in relation to the bundles of carbon fibers after burning and phenol resin powder to bundles of carbon fibers and a soft coating of a plastic of a thermoplastic resin was formed on the circumference of the carbon fiber bundles to obtain a preformed yarn as a soft intermediate material. The preformed yarn was formed to be sheet-like shape by a method disclosed in JP-A-2-80639 specification, a necessary amount of the preformed yarn sheet was laminated and then the layered yarn was formed by a hot press in a shape for a part of a setter for thermal treatment of a metal and the formed body was fired to obtain a fired body. The part produced in such a manner for the setter for thermal treatment of a metal was made of a composite material composed of carbon fibers and carbon other than carbon fibers and having a specified layered structure and a matrix structure: the carbon fibers formed the specified layered structure composed of specified number of carbon fiber bundles and the carbon other than carbon fibers formed the matrix filling the gaps between neighboring layers of the layered structure.

(2) Application of a coating agent

The formed product produced by a manner as described above for the part of a setter for thermal treatment of a metal was immersed in a coating agent produced by mixing a metallic silicon and a resol type phenol resin in 1 : 2 ratio by weight for 15 minutes. After the immersion, the product was dried at 200°C to cure the phenol resin. The resultant product was housed in a furnace, gradually heated to about 1000°C in argon atmosphere, kept at the temperature for about 3 hours to completely carbonize the phenol resin. On completion of the carbonization operation, the inner temperature of the furnace was gradually increased and when the temperature reached abut 1600°C, the product was kept for 3 hours at the same temperature to carry out complete reaction of the metallic silicon with carbon to form a layer practically consisting of metallic silicon and silicon carbide. Through these processes, a desired part for a setter for thermal treatment of a metal was produced. By the above-mentioned method, the obtained part including the hard silicon carbide layer was not required to be subjected to post-processing such as cutting processing or the like to be formed in a desired shape and therefore it could be said that the method was a significantly economical method.

The part obtained in such a manner for a setter for thermal treatment of a metal was found coated with an oxidation resistant protective layer which was practically insusceptible to oxidation even being exposed at a high temperature of 800 to 1000°C for 100 hours in the atmospheric air. Test specimens were cut out of the part for a setter obtained in such a manner and subjected to the above described preliminary test for oxidation resistance. For comparison, test specimens of Si-SiC type composite materials with the same size were subjected the same preliminary test. The results of the preliminary test showed that no weight decrease was at all observed for the test specimens having the oxidation resistant protective layer of silicon carbide relevant to the present invention. However, decrease of about 33% of weight was observed for the test specimens of the Si-SiC type composite materials. Further, test specimens cut out of the part for a setter were subjected to an actual test and as a result of the test, the weight decrease was not at all observed for the test specimens even after exposure for 100 hours at both 800°C and 1000°C.

As being made clear according to the above-mentioned test results, it is needless to say that the oxidation resistant carbonaceous material coated with an oxidation resistant protective layer of the present invention has high strength (high heat impact resistance) at a high temperature, high reliability (toughness, impact resistance, wear resistance) as a material, and durability to environments (corrosion resistance, oxidation resistance, radiation resistance). Additionally, since an amorphous carbon very easy to be obtained is usable for a substrate, the present invention has an outstanding advantage that a material with extremely high oxidation resistance is made available at low cost and that such a member with high oxidation resistance can be produced by significantly simple process. It is needless to say that, in addition to the excellent high temperature property, the material made available using a C/C composite for a substrate, or a Si-SiC type composite material produced by impregnating the C/C composite with metal silicon, or a SiC type composite material is excellent in application to a scope of fields where light weight property and easy workability are required, for example, as a member for aluminum melt, a member for stirring a molten metal, and the likes.

To provide an innovative oxidation resistant carbonaceous material usable as an oxidation resistant carbonaceous material practically prevented from oxidation for a long duration even at a high temperature at lowest 800°C in the atmospheric air at a reasonable price and satisfying the properties such as light weight property in terms of saving energy and easy workability additionally to high strength (high heat impact resistance) at a high temperature, high reliability (toughness, impact resistance, wear resistance) as a material, and durability to environments (corrosion resistance, oxidation resistance, radiation resistance) and to provide a method for producing the same oxidation resistant carbonaceous material. This oxidation resistant carbonaceous material coated with an oxidation resistant protective layer of silicon carbide practically insusceptible to oxidation even being exposed at a high temperature at lowest 800°C in the atmospheric air for a long duration can be obtained by forming the oxidation resistant protective layer of silicon carbide by applying a coating agent containing metallic silicon and a phenol resin in a desired thickness to at least a part of the surface of a carbonaceous material, carbonizing the phenol resin by prefiring the coating agent at 1000°C or lower in an inert atmosphere, heating the material to 1420 to 2200°C in the same atmosphere, and causing reaction of the practically entire amount of the metallic silicon with carbon in the same temperature range.

**Claims**

1. An oxidation resistant carbonaceous material which is a carbonaceous material coated with an oxidation resistant protective layer of silicon carbide practically insusceptible to oxidation even at a high temperature of 800°C or higher

2. An oxidation resistant carbonaceous material as claimed in claim 1, wherein said carbonaceous material is selected from the group consisting of a C/C composite, a Si-SiC type composite material, and a SiC type composite material.

3. An oxidation resistant carbonaceous material as claimed in claim 1, wherein the oxidation resistant carbonaceous material is a formed product.

4. A method for producing an oxidation resistant carbonaceous material whose surface is coated with an oxidation resistant protective layer of silicon carbide practically insusceptible to oxidation even if the material is exposed for a long duration to a high temperature of 800°C or higher in the presence of the atmospheric air, comprising applying a coating agent containing metallic silicon and a phenol resin to at least a part of the surface of a carbonaceous material, carbonizing the phenol resin by prefiring the coating agent at 1000°C or lower in an inert atmosphere, heating the material to 1420 to 2200°C in the same atmosphere, and reacting the practically total amount of the metallic silicon with carbon in the same temperature range to form the oxidation resistant protective layer of silicon carbide.

5.  A method for producing an oxidation resistant carbonaceous material as claimed in claim 4, wherein the thickness of the applied coating agent is 50 to 500 µm.

6.  A method for producing an oxidation resistant carbonaceous material as claimed in claim 4 or 5, wherein the carbonaceous material is selected from the group consisting of a C/C composite, a Si-SiC type composite material, and a SiC type composite material.

FIG.1

FIG.2(a)

FIG.2(b)

## FIG.3(a)

## FIG.3(b)